# EUROPÄISCHE PATENTSCHRIFT

(11) **EP 2 157 680 B1**
(45) Veröffentlichungstag und Bekanntmachung des Hinweises auf die Patenterteilung: **28.09.2016**
(21) Anmeldenummer: 09161051.9
(22) Anmeldetag: 26.05.2009
(51) Int. Cl.: H02K 9/22, H02K 15/14, H02K 9/18

(54) **Antriebseinheit für Komponenten einer Verbrennungskraftmaschine und Verfahren zur Herstellung einer derartigen Antriebseinheit**
Electric drive for components of a combustion engine; corresponding process
Moteur électrique pour pièces d`un moteur à combustion; procédé correspondant

(30) Priorität: 12.08.2008 DE 102008038681
(43) Veröffentlichungstag der Anmeldung: 24.02.2010
(73) Patentinhaber: Pierburg GmbH, 41460 Neuss (DE)
(72) Erfinder: Witte, Hartmut, 41466 Neuss (DE)
(74) Vertreter: ter Smitten, Hans

(56) Entgegenhaltungen:
- EP-A1- 0 432 322
- DE-A1- 19 602 173
- DE-A1-102005 030 218
- DE-B3-102005 022 793

## Beschreibung

Die Erfindung betrifft eine Antriebseinheit für Komponenten einer Verbrennungskraftmaschine mit einem Elektromotor, der an einem ersten axialen Ende eine aus seinem Gehäuse ragende Abtriebswelle aufweist, die direkt oder indirekt mit einer anzutreibenden Komponente gekoppelt ist, einem Kunststoffgehäuse, an dem der Elektromotor befestigt ist und welches den Elektromotor radial zumindest teilweise umgibt und Mitteln zur Abfuhr von Wärme aus dem Elektromotor sowie ein Verfahren zur Herstellung einer derartigen Antriebseinheit.

Derartige Antriebseinheiten werden beispielsweise zum Antrieb von Stellvorrichtungen für Klappen oder Ventile unter Zwischenschaltung eines Getriebes oder zum Antrieb von elektrischen Pumpen verwendet.

Das zumeist spritzgegossene Kunststoffgehäuse kann dabei unterschiedliche Trennebenen aufweisen, so dass der Elektromotor von unterschiedlichen Seiten in das Gehäuse eingelegt oder eingeschoben wird. Unabhängig von diesen Ausführungen ist der Elektromotor bei den bekannten Ausführungen nach dem Zusammenbau sowohl radial als auch zumindest an seinem zur Abtriebswelle entgegengesetzten axialen Ende vollständig vom Kunststoffgehäuse umgeben.

Die bekannten Elektromotoren erzeugen jedoch eine hohe auftretende Verlustwärme, wodurch sie zum Aufheizen der gesamten Antriebseinheit und somit auch einer Steuereinheit zur Ansteuerung des Elektromotors erheblich beitragen. Je nach vorhandenen Umgebungstemperaturen kann dies zum Ausfall der Antriebseinheit führen, so dass deren Einsatzmöglichkeiten deutlich beschränkt sind. Diese Einschränkungen bestehen insbesondere bei Antriebseinheiten mit Steuereinheiten, die eine hohe Anzahl an Leistungshalbleitern aufweisen, die ihrerseits eine hohe Wärme erzeugen. Da es gleichzeitig erforderlich ist, derartige Antriebseinheiten aufgrund der Umgebung dicht auszuführen, müssen Vorkehrungen getroffen werden, um die Wärme aus der Antriebseinheit möglichst gut abführen zu können.

So ist beispielsweise aus der JP 20-55842 AA eine Antriebseinheit für eine Drosselklappe einer Verbrennungskraftmaschine bekannt, die einen Elektromotor aufweist, der von einem Gehäuse umgeben ist, an dessen radialem Umfang ein von Kühlmittel durchströmter Kanal ausgebildet ist, über den die Verlustwärme des Elektromotors abgeführt wird. Auf diese Weise wird ein Überhitzen des Elektromotors zuverlässig verhindert. Eine derartige Ausführung hat jedoch den Nachteil, dass zusätzliche Bauteile zur Verwirklichung des Kühlmittelkanals verwendet werden müssen und zusätzliche Anschlüsse zur Kühlmittelzufuhr und Kühlmittelabfuhr vorgesehen werden müssen. Dies verursacht einen erhöhten Montageaufwand und zusätzliche Herstellungskosten.

Des Weiteren ist aus der DE 198 05 908 A1 eine Antriebseinheit bekannt, bei der der Elektromotor von hinten mit dem axialen Ende, an dem die Abtriebswelle aus dem Motorgehäuse ragt, in ein Kunststoffgehäuse eingeschoben wird. Anschließend wird diese Öffnung des Kunststoffgehäuses durch ein Deckelelementes aus Metall verschlossen, welches gegen das entgegengesetzte axiale Ende des Elektromotors anliegt und radial dass B-Lager des Elektromotors umgibt. Hierdurch erfolgt eine Fixierung des Elektromotors im Gehäuse. Die Befestigung des Deckels wird durch Bördeln am Kunstststoffgehäuse hergestellt. Neben der Fixierung des Elektromotors wird durch das Deckelelement auch in erheblichem Maße die entstehende Verlustwärme des Elektromotors an die Umgebung abgeführt, da der Wärmeleitwert des Metalls deutlich besser ist als der des Kunststoffgehäuses und ein fester Kontakt zwischen dem zweiten axialen Ende des Elektromotors und dem Deckelelement sichergestellt wird.

Aus der DE 10 2005 022 793 B3 ist ein metallisches Statorgehäuse bekannt, welches an seinen die Lager des Rotors aufnehmenden Bereichen mit Kunststoff umspritzt ist. Die Wärmeabfuhr aus dem Lagerbereich ist somit deutlich erschwert.

Aus der DE 10 2005 030 218 A1 ist es bekannt zur leichteren Anbindung eines Getriebes, den Elektromotor mit einem Adapterteil zu koppeln, welches formschlüssig oder kraftschlüssig am Elektromotor befestigt wird.

Die EP 0 432 322 A1 offenbart ein in Längsrichtung teilbares Statorgehäuse eines Elektromotors, welches nach außen weisende Kühlrippen aufweist.

Die DE 196 02 173 A1 beschreibt ein Gehäuse für einen Elektromotor mit einem Gehäuserohr, welches zwischen zwei aneinander mittels Schrauben befestigen Lagerschilden eingeklemmt ist.

Nachteilig an dieser Antriebseinheit ist es jedoch, dass die Wärme abgebende Fläche weiterhin relativ klein ist und beim Aufbringen des Deckels eine zusätzliche Abdichtung zum Gehäuse sichergestellt werden muss, um ein Eindringen von Flüssigkeiten aus der Umgebung zu verhindern. Des Weiteren bildet das Bördeln des Deckels einen zusätzlichen Verfahrensschritt in der Fertigung.

Es ist daher Aufgabe der Erfindung, eine Antriebseinheit zu schaffen, mit der effektiv eine möglichst große Menge der Verlustwärme des Elektromotors abgeführt werden kann, wobei die Fertigungs- und Montageschritte und somit die Kosten im Vergleich zu bekannten Ausführungen minimiert werden sollen. Hierzu soll auch ein entsprechendes Verfahren zur Herstellung einer Antriebseinheit bereitgestellt werden.

Diese Aufgabe wird dadurch gelöst, dass die Mittel zur Abfuhr von Wärme durch einen Kühlkörper aus Metall gebildet sind, dessen offenes Ende vom Kunststoffgehäuse umspritzt ist, wobei der Kühlkörper an dem zur Abtriebswelle entgegengesetzten zweiten axialen Ende des Elektromotors anliegt und der Elektromotor über seinen Umfang im von der Abtriebswelle entfernten Bereich vom Kühlkörper umgeben ist, wobei der Kühlkörper das zweite axiale Ende des Elektromotors an seinem B-Lager oder an seinem B-Lagerschild radial fixiert. Hierdurch wird die Wärmeleitfläche im Vergleich zu bekannten Ausführungen erhöht, so dass die entstehende Verlustwärme des Elektromotors in hohem Maße an die Umgebung abgeführt werden kann. Gleichzeitig verhindert eine derartige Ausführung auch ohne Zwischenlage von Dichtungen ein Eindringen von Flüssigkeiten in die Antriebseinheit. Dadurch, dass der Kühlkörper bei der Herstellung des Kunststoffgehäuses mit eingespritzt wird, entfallen zusätzliche Fertigungsschritte. Zusätzliche Vorkehrungen zur Befestigung des axialen Endes des Elektromotors sind entsprechend auch nicht vorzusehen.

wird diese Aufgabe durch ein Verfahren mit folgenden Schritten gelöst: a) ein Kühlkörper wird durch Tiefziehen hergestellt; b) der Kühlkörper wird in eine Spritzgussform eingelegt; c) ein Gehäuse der Antriebseinheit wird gespritzt, wobei ein offenes Ende des Kühlkörpers dicht umspritzt wird; d) ein Elektromotor wird in eine Öffnung des Gehäuses eingesetzt und gegen ein axial geschlossenes Ende des Kühlkörpers gedrückt und in dieser Stellung von der Einsteckseite am Gehäuse verschraubt, wobei der Kühlkörper das zweite axiale Ende des Elektromotors an seinem B-Lager oder an seinem B-Lagerschild radial fixiert; e) eine Abtriebswelle des Elektromotors wird direkt oder indirekt mit folgenden anzutreibenden Komponenten verbunden.

Bei Verwendung dieses Verfahrens zur Herstellung einer Antriebseinheit wird im Vergleich zu bekannten Ausführungen die Anzahl der notwendigen Verfahrensschritte reduziert und gleichzeitig kostengünstige Herstellungsverfahren genutzt. Dennoch entsteht eine Antriebseinheit mit hoher Lebensdauer, die ein Überhitzen des Elektromotors zuverlässig verhindert.

Zur weiteren Verringerung der Herstellkosten ist der Kühlkörper vorzugsweise ein Tiefziehteil

besonders gute Wärmeabfuhr und gleichzeitig ein guter Korrosionsschutz wird erreicht, wenn der Kühlkörper aus Edelstahlblech hergestellt ist.

Vorteilhaft ist es, wenn der Kühlkörper im umspritzten Bereich mit einem Abschnitt ausgebildet ist, der eine radiale Komponente aufweist. Hierdurch kann die Festigkeit der Verbindung zwischen dem Kunststoffgehäuse und dem Kühlkörper erhöht werden.

In einer weiterführenden Ausführungsform ist der Elektromotor mit seinem ersten axialen Ende am Kunststoffgehäuse verschraubt. So kann auf einfache Weise eine Fixierung des Elektromotors in der Antriebseinheit erfolgen.

Es wird somit eine Antriebseinheit geschaffen, deren Elektromotor zuverlässig vor Überhitzung geschützt wird und die mit wenigen kostengünstigen Verfahrensschritten herstellbar ist. Gleichzeitig erfolgt eine einfache und sichere Fixierung des Elektromotors in der Antriebseinheit.

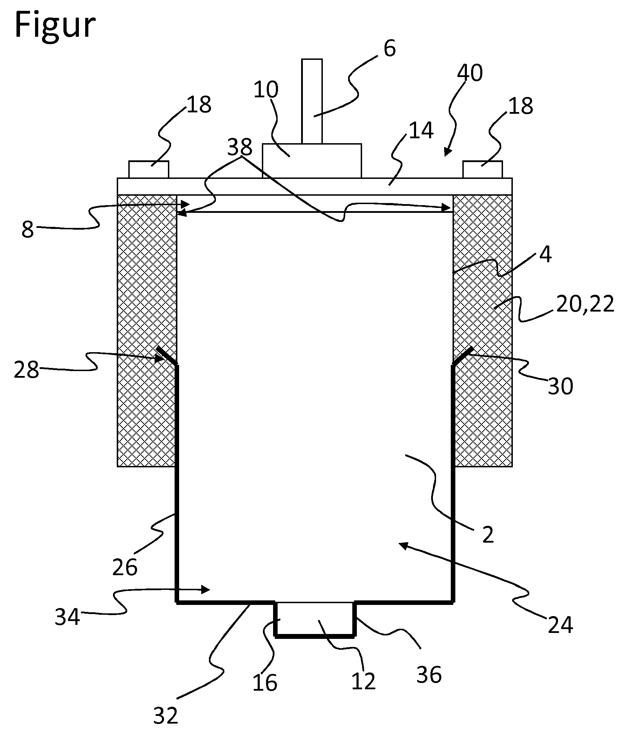

Eine erfindungsgemäße Ausführung ist in der einzigen Figur dargestellt und wird nachfolgend beschrieben.

Die Figur zeigt eine schematische Darstellung der für die Erfindung relevanten Bauteile einer erfindungsgemäßen Antriebseinheit in Seitenansicht.

Die erfindungsgemäße Antriebseinheit besteht aus einem Elektromotor 2, dessen Außengehäuse 4 entweder als separates Gehäuseteil oder direkt durch ein Polrohr gebildet ist. Im Außengehäuse 4 sind in bekannter Weise ein Stator und ein Rotor angeordnet, der fest mit einer Abtriebswelle 6 verbunden ist, so dass bei Bestromung des Elektromotors 2 der Rotor und somit die Abtriebswelle 6 in Drehung versetzt werden.

Die Abtriebswelle 6 ragt an einem ersten axialen Ende 8 des Elektromotors 2 aus dem Außengehäuse 4 heraus und wird über ein A-Lager 10 und ein B-Lager 12 drehbar innerhalb des Außengehäuses 4 gelagert. Im vorliegenden Ausführungsbeispiel befindet sich das A-Lager 10 in einem A-Lagerschild 14, während das B-Lager in einer topfförmigen Ausstülpung 16 des Außengehäuses 4 angeordnet ist.

Das A-Lagerschild 14, welches das erste axiale Ende 8 des Elektromotors verschließt, ist über Schrauben 18 mit einem Gehäuse 20 der Antriebseinheit fest verbunden. Dieses Gehäuse 20 ist als Kunststoffgehäuse ausgeführt und weist im vorliegenden Ausführungsbeispiel zumindest ein etwa rohrförmiges Teil 22 auf, in welches der Elektromotor 2 eingesteckt werden kann. Die axiale Erstreckung dieses zylinderförmigen Teils ist jedoch kleiner als die axiale Erstreckung des Elektromotors 2. Selbstverständlich wird dieses Gehäuse 20 üblicherweise zusätzlich beispielsweise als Gehäuse zur Aufnahme eines Getriebes oder zur Unterbringung einer Steuerelektronik dienen. Entsprechend ist in der Figur nur ein Abschnitt des Kunststoffgehäuses 20 dargestellt.

Der von der Abtriebswelle 6 entfernte Bereich 24 des Elektromotors 2 ist erfindungsgemäß von einem im Wesentlichen topfförmig ausgebildeten Kühlkörper 26 umgeben, der vorzugsweise durch Tiefziehen aus einem Edelstahlblech hergestellt wird. An seinem offenen Ende 28 ist der topfförmige Kühlkörper 26 mit einem sich erweiternden Abschnitt 30 ausgeführt, welcher eine axiale Komponente und eine radiale Komponente aufweist. Die radiale Komponente diese Erweiterung 30 stellt die nicht lösbare Befestigung des Kühlkörpers 26 am Kunststoffgehäuse 20 sicher.

An seinem entgegengesetzten geschlossenen axialen Ende 32 entspricht die Form des Kühlkörpers 26 der Form des Außengehäuses 4 des Elektromotors 2, so dass nach dem Einstecken des Elektromotors 2 in das rohrförmige Teil 22 des Gehäuses 20 das zweite axiale Ende 34 des Elektromotors 2 fest gegen das geschlossene axiale Ende 32 des Kühlkörpers 26 anliegt. Diese feste Anlage des geschlossenen axialen Endes 32 des Kühlkörpers 26 am zweiten axialen Ende 34 des Elektromotors 2 wird durch das Einstecken des Elektromotors 2 in das Gehäuse 20 und das anschließende Festziehen der Schrauben 18 am Kunststoffgehäuse durch das A-Lagerschild 14 erreicht. Die radiale Fixierung des zweiten axialen Endes 34 des Elektromotors 2 erfolgt über die Anordnung des B-Lagers 12 in einer entsprechend ausgeformten Ausstülpung 36 des geschlossenen Endes 32 des Kühlkörpers 26. Alternativ wäre es möglich, diese radiale Fixierung auch über ein gegebenenfalls vorhandenes B-Lagerschild bei entsprechender Ausformung des Kühlkörpers 26 vorzusehen.

Der Elektromotor 2 ist an seinem von der Abtriebswelle 6 entfernten Bereich 24 über seinen gesamten Umfang ebenfalls von dem Kühlkörper 26 umgeben. Um eine Lageüberbestimmung des Elektromotors 2 zu vermeiden, ist hier ein geringfügiger Spalt zwischen dem Außengehäuse 4 des Elektromotors 2 und dem Kühlkörper 26 vorzusehen.

Durch diesen Kühlkörper 26 kann die im Elektromotor 2 entstehende Verlustwärme insbesondere aufgrund der guten Wärmeleitfähigkeit zuverlässig insbesondere aufgrund der guten Wärmeleitfähigkeit des Metalls im Vergleich zu Kunststoff abgeführt werden.

Beim Zusammenbau einer erfindungsgemäßen Antriebseinheit wird zunächst der Kühlkörper 26 durch Tiefziehen hergestellt. Anschließend wird der Kühlkörper 26 in eine Spritzgussform eingelegt, so dass sein offenes Ende 28 in einem Verfahrensschritt mit der Herstellung des Kunststoffgehäuses 20 durch Spritzgießen umspritzt werden kann. Daraufhin wird der Elektromotor 2 von einer zum geschlossenen Ende 32 des Kühlkörpers 26 wegweisenden Einsteckseite 40 des Kunststoffgehäuses 20 in eine entsprechende Öffnung 38 des Kunststoffgehäuses 20 eingeschoben. Im folgenden Verfahrensschritt wird der Elektromotor 2 über sein A-Lagerschild 14 von der Einsteckseite 40 aus am Kunststoffgehäuse 20 verschraubt und somit mit einem zweiten axialen Ende 34 gegen das geschlossene Ende 32 des Kühlkörpers 26 gedrückt. Anschließend kann die Abtriebswelle 6 des Elektromotors 2 mit den folgenden Komponenten verbunden werden.

Es sei darauf hingewiesen, dass bei Verwendung der Antriebseinheit als Aktuator zumeist auf dem aus dem Außengehäuse 4 ragenden Ende der Abtriebswelle 6 ein Zahnrad angeordnet ist, welches mit einem nachfolgenden Getriebe kämmt, das wiederum eine Antriebswelle beispielsweise für ein Ventil oder eine Klappe antreibt. Auch kann eine derartige Antriebseinheit für eine Pumpe verwendet werden, wobei dann auf der Abtriebswelle beispielsweise das Laufrad der Pumpe angeordnet sein kann.

Im Vergleich zum hohen Herstellungsaufwand bei Verwendung zusätzlicher Kühlkanäle oder dem nachträglichen Bördeln eines Deckels, der nur eine geringe Wärmeableitfläche aufweist, können somit Verfahrensschritte eingespart und somit Herstellkosten minimiert werden, wobei gleichzeitig eine sehr gute Wärmeabfuhr sichergestellt wird.

Es wird deutlich, dass verschiedene konstruktive Ausgestaltungen des Elektromotors oder auch des Gehäuses sowie verschiedene Anwendungen denkbar sind, ohne den Schutzbereich des Hauptanspruchs zu verlassen. Entsprechend der verwendeten Form des Elektromotors kann auch die Form des Kühlkörpers angepasst werden. Wichtig bei der Verwendung des erfindungsgemäßen Gegenstandes ist vor allem die einfache Befestigung des Kühlkörpers durch das Umspritzen sowie ein ausreichender Kontakt des Kühlkörpers zum Elektromotor zur ausreichenden Abfuhr von Wärme.

## Patentansprüche

1. Antriebseinheit für Komponenten einer Verbrennungskraftmaschine,
mit einem Elektromotor (2), der an einem ersten axialen Ende (8) eine aus seinem Gehäuse (4) ragende Abtriebswelle (6) aufweist, die direkt oder Indlrekt mit einer anzutreibenden Komponente gekoppelt ist,
einem Kunststoffgehäuse (20), an dem der Elektromotor (2) befestigt ist und welches den Elektromotor (2) radial zumindest teilweise umgibt und Mitteln zur Abfuhr von Wärme aus dem Elektromotor (2),
**dadurch gekennzeichnet, dass**
die Mittel zur Abfuhr von Wärme durch einen Kühlkörper (26) aus Metall gebildet sind, dessen offenes Ende (28) vom Kunststoffgehäuse (20) umspritzt ist, wobei der Kühlkörper (26) an dem zur Abtriebswelle (6) entgegengesetzten zweiten axialen Ende (34) des Elektromotors (2) anliegt und der Elektromotor (2) über seinen Umfang Im von der Abtriebswelle (6) entfernten Bereich (24) vom Kühlkörper (26) umgeben ist, wobei der Kühlkörper (26) das zweite axiale Ende (34) des Elektromotors (2) an seinem B-Lager (12) oder an seinem B-Lagerschild radial fixiert.

2. Antriebseinheit für Komponenten einer Verbrennungskraftmaschine nach Anspruch 1,
**dadurch gekennzeichnet, dass**
der Kühlkörper (26) ein Tiefziehteil ist.

3. Antriebseinheit für Komponenten einer Verbrennungskraftmaschine nach einem der vorhergehenden Ansprüche,
**dadurch gekennzeichnet, dass**
der Kühlkörper (26) aus Edelstahlblech hergestellt Ist.

4. Antriebseinheit für Komponenten einer Verbrennungskraftmaschine nach einem der vorhergehenden Ansprüche,
**dadurch gekennzeichnet, dass**
am Kühlkörper (26) im umspritzten Bereich ein Abschnitt (30) ausgebildet ist, der eine radiale Komponente aufweist.

5. Antriebseinheit für Komponenten einer Verbrennungskraftmaschine nach einem der vorhergehenden Ansprüche,
**dadurch gekennzeichnet, dass**
der Elektromotor (2) mit seinem ersten axialen Ende (8) am Kunststoffgehäuse (20) verschraubt ist.

6. Verfahren zur Herstellung einer Antriebseinheit für Komponenten einer Verbrennungskraftmaschine mit folgenden Schritten:
a) ein Kühlkörper (26) wird durch Tiefziehen hergestellt;
b) der Kühlkörper (26) wird in eine Spritzgussform eingelegt;
c) ein Gehäuse (20) der Antriebseinheit wird gespritzt, wobei ein offenes Ende (28) des Kühlkörpers (26) dicht umspritzt wird;
d) ein Elektromotor (2) wird in eine Öffnung (38) des Gehäuses (20) eingesetzt und gegen ein axial geschlossenes Ende (32) des Kühlkörpers (26) gedrückt und in dieser Stellung von der Einsteckseite (40) am Gehäuse (20) verschraubt, wobei der Kühlkörper (26) das zweite axiale Ende (34) des Elektromotores (2) an seinem B-Lager (12) oder an seinem B-Lagerschild radial fixiert;
e) eine Abtriebswelle (6) des Elektromotors (2) wird direkt oder indirekt mit folgenden anzutreibenden Komponenten verbunden.

## Claims

1. Drive unit for components of an internal combustion engine, comprising an electric motor (2) having an output shaft (6) protruding from its housing (4) at its first axial end (8), the shaft being directly or indirectly coupled with a component to be driven, a plastic housing (20) to which the electric motor (2) is fastened and which radially surrounds the electric motor (2) at least in part, and means for dissipating heat from the electric motor (2),
**characterized in that**
the means for dissipating heat are formed by a heat sink (26) of metal, the open end (26) of which is overmolded in the plastic housing (20), wherein the heat sink (26) abuts on the second axial end (34) of the electric motor (2) opposite the output shaft (6) and the electric motor (2) is surrounded over its circumference by the heat sink (26) in the region (24) remote from the output shaft (6), wherein the heat sink (26) radially fixes the second axial end (34) of the electric motor (2) at its B-bearing (12) or at its B-bearing plate.

2. Drive unit for components of an internal combustion engine of claim 1, **characterized in that** the heat sink (26) is a deep-drawn part.

3. Drive unit for components of an internal combustion engine of one of the preceding claims, **characterized in that** the heat sink (26) is made of stainless steel sheet.

4. Drive unit for components of an internal combustion engine of one of the preceding claims, **characterized in that** a section (30) is formed on the heat sink (26) in the overmolded region, which section has a radial component.

5. Drive unit for components of an internal combustion engine of one of the preceding claims, **characterized in that** the electric motor (2) is screwed to the plastic housing (20) by its first axial end.

6. Method for producing a drive unit for components of an internal combustion engine, the method comprising the following steps:
a) producing a heat sink (26) by deep-drawing;
b) placing the heat sink (26) in an injection mold;
c) molding a housing (20) of the drive unit, an open end (28) of the heat sink (26) being overmolded tightly;
d) inserting an electric motor (2) into an opening (38) of the housing (20) and pressing the motor against an axially closed end (32) of the heat sink (26) and screwing it on the housing (20) in this position from the insertion side (40), wherein the heat sink (26) radially fixes the second axial end (34) of the electric motor (2) at its B-bearing (12) or at its B-bearing plate;
e) directly or indirectly connecting an output shaft (6) of the electric motor (2) with downstream components to be driven.

## Revendications

1. Unité d'entrainement pour pièces d'un moteur à combustion interne, avec un moteur électrique (2) ayant à sa première extrémité (8) axiale un arbre de sortie (6) en saillie de son carter (4), l'arbre étant couplé sot directement, soit indirectement avec une pièce à entraîner,
un carter (20) en matière plastique auquel est monté le moteur électrique (2) et qui entoure le moteur électrique (2) au moins partiellement dan la direction radiale, et des moyens pour dissiper de la chaleur du moteur électrique (2),
**caractérisée en ce que**
les moyens pour dissiper de la chaleur sont formés par un dissipateur thermique (26) en métal, dont l'extrémité ouverte (28) est surmoulée par le carter (20) en matière plastique, ledit dissipateur thermique (26) s'appuie à la deuxième extrémité (34) axiale du moteur électrique (2), opposée à l'arbre de sortie (6), et le moteur électrique (2) est entouré, dan sa partie (24) éloignée de l'arbre de sortie (6), sur son pourtour par le dissipateur thermique (26), ledit dissipateur thermique (26) fixant la deuxième extrémité (34) axiale du moteur électrique (2) radialement sur son palier B (12) ou sur son flasque B.

2. Unité d'entrainement pour pièces d'un moteur à combustion interne selon la revendication 1, **caractérisée en ce que** le dissipateur thermique (26) est une pièce emboutie.

3. Unité d'entrainement pour pièces d'un moteur à combustion interne selon l'une quelconque des revendications précédentes, **caractérisée en ce que** le dissipateur thermique (26) est fabriqué en tôle d'acier inoxydable.

4. Unité d'entrainement pour pièces d'un moteur à combustion interne selon l'une quelconque des revendications précédentes, **caractérisée en ce qu'**une section (30) est formée sur le dissipateur thermique (26) dans la partie surmoulée, la section ayant une composante radiale.

5. Unité d'entrainement pour pièces d'un moteur à combustion interne selon l'une quelconque des revendications précédentes, **caractérisée en ce que** le moteur électrique (2) est vissé sur le carter (20) en matière plastique par sa première extrémité axiale (8).

6. Procédé de fabrication d'une unité d'entrainement pour pièces d'un moteur à combustion interne, avec les étapes suivantes:
a) fabriquer un dissipateur thermique (26) par emboutissage;
b) placer le dissipateur thermique (26) dans un moule d'injection;
c) mouler un carter (20) de ladite unité d'entrainement, une extrémité (28) ouverte du dissipateur thermique (26) étant surmoulée de manière étanche;
d) insérer un moteur électrique (2) dans une ouverture (38) du carter (20) et presser le moteur contre une extrémité (32) fermée du dissipateur thermique (26) et visser le moteur sur le carter (20) dans cette position à partir de la côté d'insertion (40), ledit dissipateur thermique (26) fixant la deuxième extrémité (34) axiale du moteur électrique (2) radialement sur son palier B (12) ou sur son flasque B;
e) relier, directement ou indirectement, un arbre de sortie (6) du moteur électrique (2) avec des pièces avales à entraîner.
